# EUROPÄISCHE PATENTANMELDUNG

(11) **EP 0 923 870 A1**
(43) Veröffentlichungstag der Anmeldung: **23.06.1999**
(21) Anmeldenummer: 98124187.0
(22) Anmeldetag: 21.12.1998
(51) Int. Cl.: A22C 13/00

(54) **Schlauchfolie**

(30) Priorität: 20.12.1997 DE 19756994; 28.04.1998 DE 19819005
(71) Anmelder: Best Line Kunststoffolien Für Nahrungsmittel GmbH, 06128 Halle/Saale (DE)
(72) Erfinder: Kollross, Günter, 1010 Wien (AT); Castellani, Roberto, 1430 Buenos Aires (AG)
(74) Vertreter: Jochem, Bernd, Dipl.-Wirtsch.-Ing.

(57) **Zusammenfassung**

Die wenigstens dreischichtige Schlauchfolie dient zur Aufnahme oder Umhüllung von Lebensmitteln und hat eine wenigstens überwiegend aus aliphatischem Polyamid bestehende Schicht. Um die Eignung als Wursthülle zu verbessern, ist vorgesehen, daß die Schlauchfolie wenigstens eine mindestens zu 40 Gew.% aus wenigstens einem Styrolhomopolymer und/oder -copolymer bestehende Schicht aufweist. Wenigstens eine weitere Schicht besteht mindestens zu 75 Gew.% aus wenigstens einem Olefinhomopolymer und/oder -copolymer. Ausserdem ist wenigstens eine Schicht vorhanden, die wenigstens ein aliphatisches und/oder teilaromatisches Homo- und/oder Copolyamid in solcher Menge und Zusammensetzung enthält, daß die Schicht zu wenigstens 75 Gew.% aus aliphatischen Polyamid-Einheiten aufgebaut ist.

## Beschreibung

Die Erfindung betrifft eine wenigstens dreischichtige Schlauchfolie zur Aufnahme oder Umhüllung von Lebensmitteln, insbesondere als Wursthülle.

Solche Schlauchfolien, die in erster Linie zum Füllen mit Wurstbrät, in geringerem Umfang zum Füllen mit Käse und anderen Lebensmitteln, bestimmt sind, müssen eine Reihe von Eigenschaften aufweisen, um zu handelsfähigen Produkten zu führen. Diese Schlauchfolien müssen zum Bedrucken mit üblichen Maschinen und Farben, insbesondere wasserlöslichen Farben, geeignet sein. Für das Raffen, insbesondere auch für die Aufnahmefähigkeit von Raff hilsfmitteln, wie zugelassenen Ölen und Geschmacksverstärkern, muß die Schlauchfolie verwendbar sein. Für das Befüllen im Hand- und Automatikbetrieb, sowie das Verschließen durch Clippen bzw. Handabbindung müssen sie den Anforderungen entsprechen. Weiterhin müssen sie nach der üblichen Erhitzungsbehandlung des Füllgutes faltenfrei an dem Füllgut anliegen und zu einer definierten Haftung des Füllgutes an der Innenseite der Schlauchfolie führen, da sonst unansehnliche Produkte entstehen würden. Hierzu muß die Schlauchfolie einen gewissen Schrumpf haben, darf sich aber bei der Hitzebehandlung nach der Befüllung nicht in unansehnlicher Weise verformen, wie durch Krümmen oder Ausbeulen. Sie darf beim Kochen oder Sterilisieren und beim Abkühlen nicht platzen oder reißen.

Weiterhin darf die Schlauchfolie nur eine geringe Wasserdampfdurchlässigkeit besitzen, um Gewichtsverluste zu minimieren und die Qualität des Füllgutes zu sichern, und muß eine gute Sauerstoffbarriere bilden, um eine Oberflächenoxidation und damit ein unerwünschtes Vergrauen der Wurstbrätoberfläche, insbesondere bei Lagerung ohne Kühlung, zu verhindern.

Mehrschichtige, wie insbesondere drei- oder fünfschichtige Schlauchfolien für den angegebenen Zweck sind in zahlreichen Schichtenkombinationen bekannt und werden durch Koextrudieren und häufig anschließendes biaxiales Verstrecken gewonnen. Beispielsweise beschreibt die DE-A-4 339 337 eine fünfschichtige Schlauchfolie, bei der die innere, dem Füllgut zugekehrte und die äußere Schicht aus dem gleichen Polyamidmaterial bestehen und eine mittlere Polyolefinschicht einschließen, wobei zwischen der Polyolefinschicht und der Innenschicht bzw. Außenschicht jeweils eine aus dem gleichen Material bestehende Haftvermittlerschicht eingefügt ist.

Die der Erfindung zugrundeliegende Aufgabe bestand darin, Schlauchfolien mit einer überlegenen Eigenschaftskombination bezüglich der eingangs geschilderten erforderlichen Eigenschaften zu bekommen.

Diese Aufgabe wird erfindungsgemäß durch eine wenigstens dreischichtige Schlauchfolie mit den Merkmalen des Anspruches 1 gelöst.

Die Schichten (a), (b) und (c) können beliebig als dem Füllgut zugekehrte Innenschicht, als Außenschicht oder Mittelschicht vorliegen und als einheitliche Schicht oder als mehrere Unterschichten ausgebildet sein. Zweckmäßig sind die Innenschicht eine Schicht der Zusammensetzung (a) und die Außenschicht eine Schicht der Zusammensetzung (c), wobei die Schicht (b) dazwischen angeordnet ist.

Die Schicht (a) ergibt eine Reihe von Effekten, die im Stand der Technik nicht bekannt war und besonders günstig für Lebensmittelhüllen, insbesondere Wursthüllen, ist. Die Verwendung eines Styrolhomo- oder -copolymeren in der Schicht (a) ermöglicht eine höhere Gleichmäßigkeit des Schrumpfes und garantiert damit einem faltenfreien Sitz der Wursthülle auf der gebrühten Wurst. Bei Verwendung der Schicht (a) als Innenschicht kann eine gezielte Haftung am Wurstbrät eingestellt werden. Der Zusatz von verträglichen, lebensmittelrechtlich zugelassenen Stoffen, insbesondere von Antiblock- oder Mattierungsmitteln, erhöht die Aufnahmefähigkeit gegenüber Wachsen, Ölen und Geschmacksverstärkern, die sich positiv auf den Raffvorgang auswirken. Bei Verwendung der Schicht (a) als Außenschicht läßt sich die Bedruckbarkeit durch eine Koronabehandlung verbessern. Die Haftung von wasserlöslichen Farben ist durch höhere Wasseraufnahmefähigkeit dieser Schicht deutlich größer. Eine Mischung von Polyamid mit Styrolcopolymer und nachgeschaltete Koronabehandlung bewirken eine weitere Verbesserung der Bedruckbarkeit.

Die Schicht (c) verleiht der Schlauchfolie erhöhte Flexibilität, was das Raffen, Clippen und Abbinden in Unabhängigkeit vom Kaliber und die Verarbeitung von Raffraupen bei maschineller Füllung verbessert. Die Schlauchfolien können maschinell oder von Hand abgefüllt werden. Die Schlauchfolie besitzt exakte Maß- und Formhaltigkeit beim Abkühlen, die Schicht (c) als Außen- bzw. Innenschicht verrringert die statische Aufladung.

Die Schicht (a) enthält erfindungsgemäß mindestens 40 Gew. %, vorzugsweise mindestens 60 Gew.%, besonders mindestens 75 Gew.% Styrolhomo- und/oder -copolymer. Sie kann selbstverständlich aus Polystyrol allein bestehen, besteht aber bevorzugt aus einem Styrolcopolymer, insbesondere einem Styrol-Butadien-Copolymer. Diese erfindungsgemäß für die Schicht (a) verwendeten Styrol-Butadien-Copolymere sind vorzugsweise an sich bekannte Styrol-Butadien-Blockcopolymere mit abwechselnd weichen und harten Blöcken, wobei die harten Blöcke aus Polystyrol und die weichen aus Styrol-Butadien-Copolymer bestehen. Solche Styrol-Butadien-Copolymere besitzen sehr hohe Reißdehnung, gute Transparenz, gute Verarbeitbarkeit, hohe Schrumpfung, hohe Sauerstoff- und Wasserdampfdurchlässigkeit. Sie ergeben bei Verwendung als Innenschicht erwünschte Haftung des Füllgutes, wie Wurstbrätes, und faltenfreie Anlage an dem Füllgut nach der Hitzebehandlung. Der Rest dieser Schicht, der nicht aus Styrolhomo- und/oder -copolymer besteht, kann aus Bestandteilen der übrigen Schichten, wie Olefinpolymeren und/oder Polyamiden, bestehen. Da die Schicht (a) weder als Sauerstoffbarriere noch zur Verhinderung des Wasserdampfdurchtrittes dient, kann die Dicke dieser Schicht gering sein, wie beispielsweise 1 bis 20 µm, vorzugsweise 3 bis 10 und besonders 4 bis 8 µm.

Die Schicht (b) dient im wesentlichen als Wasserdampfsperre und besteht zu mindestens 75 Gew.% im wesentlichen aus Olefinhomo- oder Olefincopolymer. Sofern sie aus Olefinhomopolymer besteht, ist dieses Homopolymer vorzugsweise Polyethylen und/oder Polypropylen. Bevorzugt sind jedoch Copolymere linearer alpha-Olefine mit 2 bis 8 Kohlenstoffatomen oder Mischungen dieser Homopolymere oder Copolymere miteinander. Besonders geeignet sind Copolymere von Ethylen und Propylen, insbesondere Ethylen-Vinylacetat-Copolymere, speziell solche mit 5 bis 20, besonders mit 8 bis 15 Gew.% Vinylacetatgruppen. Bevorzugt sind auch Gemische von Ethylen-Vinylacetat-Copolymeren mit Ethylen-(Meth)acrylsäure-Copolymeren oderPropylen-(Meth)acrylsäure-Copolymeren, wobei die Ethylen-bzw. Propylen-(Meth)acrylsäure-Copolymere bevorzugt 3 bis 20, besonders 5 bis 15 Gew. % Carboxylgruppen enthalten. Als besonders geeignet erwies sich für diese Schicht eine Mischung von Ethylen-Vinylacetat-Copolymer (EVA) und Ethylen-(Meth)acrylsäure-Copolymer. Solche Mischungen lassen sich optimal einstellen, um die Wasserdampfdurchlässigkeit zu reduzieren. Besonders günstige Gemische bestehen im wesentlichen aus 40 bis 90 Gew. % Ethylen-Vinylacetat-Copolymer und 60 bis 10 Gew.% Ethylen-(Meth)acrylsäure-Copolymer und/oder Propylen-Acrylsäure-Copolymer, vorzugsweise 55 bis 75 Gew.% Ethylen-Vinylacetat-Copolymer und 45 bis 25 Gew.% Ethylen-(Meth)acrylsäure-Copolymer. Die Dicke dieser Schicht (b) liegt zweckmäßig im Bereich von 5 bis 50, vorzugsweise 10 bis 25, insbesondere 15 bis 20 µm.

Die Schicht (c) verleiht der Schlauchfolie mechanische Festigkeit und faltenfreien Sitz um das Füllgut und verhindert ein Platzen oder Reißen der Schlauchfolie bei der Druckbeanspruchung während des Kochens oder Sterilisierens. Diese Schicht dient als Sauerstoffbarriere und läßt sich gut bedrucken und zeigt ausreichende Haftung der Druckfarben auch während des Kochens oder Sterilisierens. Die Wandstärke dieser Schicht liegt zweckmäßig im Bereich von 10 bis 40, vorzugsweise 20 bis 30 µm. Sie kann eine einheitliche Zusammensetzung haben oder aus mehreren, vorzugsweise zwei oder drei Unterschichten bestehen, die untereinander verschiedene Zusammensetzungen haben. Es erwies sich als praktisch, diese Schicht als drei aufeinanderfolgende Unterschichten auszubilden, so daß die gesamte Schlauchfolie beispielsweise fünfschichtig aufgebaut ist.

Diese einheitliche oder aus Unterschichten bestehende Schicht (c) ist günstigerweise die Außenschicht. Unabhängig davon, ob sie einen einheitlichen Aufbau hat oder aus voneinander unterschiedlichen Unterschichten besteht, besteht sie bzw. bestehen deren Unterschichten alle wenigtens zu 75 Gew.%, vorzugsweise wenigstens 90 Gew.% aus wenigstens einem aliphatischen Homo- und/oder Copolyamid oder wenigstens einem teilaromatischen Homo- und/oder Copolyamid, gegebenenfalls im Gemisch mit einem aliphatischen Homo- und/oder Copolyamid, in solcher Zusammensetzung, daß diese Schicht zu wenigstens 75 Gew.%, vorzugsweise zu wenigstens 90 Gew.% aus aliphatischen Polyamid-Einheiten aufgebaut ist. Diese Schichten bestehen also mindestens zu 75 Gew.% aus Polyamiden mit aliphatischen Einheiten entweder in der Form eines aliphatischen Homopolyamids oder Gemisches von wenigstens zwei Homopolyamiden oder in der Form eines Copolyamids oder mehrerer Copolyamide oder aus Gemischen von Homopolyamiden und Copolyamiden sowie gegebenenfalls und zweckmäßig zusätzlich einem kleineren Anteil teilaromatischen Homo- und/oder Copolyamids in solcher Menge, daß die Gesamtheit der Polyamide dieser Schicht maximal 10 Mol%, vorzugsweise bis zu 4 Mol% aromatische Einheiten enthält. Diese Schicht kann auch bis zu 25 Gew.% weitere Polymere, wie Polyolefine, insbesondere Polyethylen, Ionomere, Styrolhomo- oder -copolymere oder Polyester, enthalten.

Das aliphatische Polyamid ist ein Homopolykondensat aus aliphatischen primären Diaminen und aliphatischen Dicarbonsäuren oder ein Homopolymerisat von ω-Aminocarbonsäuren oder deren Lactamen. Die aliphatischen primären Diamine enthalten insbesondere 4 bis 8 Kohlenstoffatome, wie Tetra-, Penta-, Hexa- und Octamethylendiamin, wobei Hexymethylendiamin bevorzugt ist. Die aliphatischen Dicarbonsäuren enthalten vorzugsweise 4 bis 12 Kohlenstoffatome, wie Adipinsäure, Azelainsäure, Sebacinsäure und Dodecandicarbonsäure. Die ω-Aminocarbonsäuren und deren Lactame enthalten zweckmäßig 6 bis 12 Kohlenstoffatome, wie 11-Aminoundecansäure, ε-Carprolactam und ω-Laurinlactam.

Besonders bevorzugte aliphatische Polyamide sind Polycaprolactam (PA 6), Polyhexamethylenadipamid (PA 66) und ein Copolyamid aus Caprolactam-Hexamethylendiamin- und Adipinsäureeinheiten (PA 6/66).

Teilaromatische Homopolyamide oder Copolyamide besitzen Diamineinheiten, die zum Teil oder ausschließlich aromatische Einheiten bilden, während die Dicarbonsäureeinheiten zweckmäßig überwiegend oder ausschließlich aliphatischer Natur sind. Umgekehrt können auch die Diamineinheiten überwiegend oder ausschließlich aliphatischer Natur und die Dicarbonsäureeinheiten überwiegend oder ausschließlich aromatischer Natur sein. Beispielsweise sind die teilaromatischen Polyamide und Copolyamide solche aus aromatischen Diamineinheiten von m-Xylylendiamin und Phenylendiamin sowie aliphatischen Dicarbonsäureeinheiten gewöhnlich mit 4 bis 10 Kohlenstoffatomen, wie solchen von Adipinsäure, Sebacinsäure und Azelainsäure. Daneben können in diesen teilaromatischen Polyamiden und Copolyamiden auch aliphatische Diamineinheiten und aromatische Dicarbonsäureeinheiten enthalten sein, bevorzugt m-Xylylendiamineinheiten und Adipinsäureeinheiten. Andererseits können die teilaromatischen Polyamide und Copolyamide auch aus Einheiten aliphatischer Diamine, vorzugsweise mit 4 bis 8 Kohlenstoffatomen, und Einheiten aromatischer Dicarbonsäuren, wie Isophthalsäure und Terephthalsäure,

aufgebaut sein. Auch hier können neben den aliphatischen Diamineinheiten aromatische Diamineinheiten und neben den aromatischen Dicarbonsäureeinheiten aliphatische Dicarbonsäureeinheiten in die Moleküle einkondensiert sein. Besonders zweckmäßig sind Polyamide aus Einheiten von Hexamethylendiamin, Isophthalsäure und Terephthalsäure.

Wenn die Schicht (c), beispielsweise als Außenschicht, aus mehreren, wie drei, Unterschichten aufgebaut ist, ist es zweckmäßig, daß von diesen Unterschichten nur die äußerste Schicht bis zu 4 Mol% aromatische Einheiten enthält, während die übrigen Unterschichten im wesentlichen nur aus aliphatischem Polyamid bestehen. Die aromatischen Einheiten der Schicht (c) bestehen zweckmäßig aus Isophthalsäureeinheiten beispielsweise in einer Menge von 2 mol%.

Bei einer zweckmäßigen Ausführungsform der Schicht (c) sind die Polyamide im wesentlichen aus aliphatischen Dicarbonsäureeinheiten mit 4 bis 10 Kohlenstoffatomen, insbesondere Adipinsäureeinheiten, und aliphatischen Diamineinheiten mit 4 bis 8 Kohlenstoffatomen, insbesondere Hexamethylendiamineinheiten, und/oder Einheiten von ω-Aminocarbonsäuren mit 6 bis 12 Kohlenstoffatomen oder deren Lactamen, insbesondere 11-Aminoundecansäure-, ω-Laurinlactam und/oder Caprolactameinheiten oder Mischungen hiervon aufgebaut. Nach einer weiteren Ausführungsform sind die teilaromatischen Homo- oder Copolyamide aus aliphatischen Diamineinheiten mit 4 bis 8 Kohlentoffatomen, insbesondere Caprolactameinheiten und/oder Hexamethylendiamineinheiten, und aromatischen Dicarbonsäureeinheiten, insbesondere Isophthalsäure- und/oder Terephthalsäureeinheiten, nach einer anderen Ausführungsform aus aromatischen Diamineinheiten, insbesondere Xylylendiamineinheiten und/oder Phenylendiamineinheiten, und aliphatischen Dicarbonsäureeinheiten mit 4 bis 10 Kohlenstoffatomen, insbesondere Adipinsäureeinheiten aufgebaut.

Gemäß einer weiteren zweckmäßigen Ausgestaltung des Erfindungsgegenstandes kann zur Verbesserung der Haftung der koextrudierten Schichten an der Olefinhomopolymer- und/oder -copolymerschicht auf einer Seite oder auf beiden Seiten dieser Schicht (b) zusätzlich eine Haftvermittlerschicht angeordnet werden. Diese hat, wenn vorhanden, zweckmäßig eine Schichtdicke von 3 bis 10, vorzugsweise 4 bis 8 µm.

Solche Haftvermittlerschichten bestehen vorzugsweise aus mit funktionellen Gruppen modifizierten Polyolefinen, wie Homo- oder Copolymeren des Ethylens und/oder Propylens, gegebenenfalls mit weiteren linearen α-Olefinen mit 3 bis 8 Kohlenstoffatomen, wobei die funktionellen Gruppen beispielsweise Vinylacetatgruppen, ethylenisch ungesättigte Carbonsäuregruppen, Salze oder Ester derselben sowie ethylenisch ungesättigte Anhydridgruppen sein können. Beispielsweise kann die Modifizierung durch Monomere aus der Gruppe der α,β-ungesättigten Dicarbonsäuren, wie Maleinsäure, Fumarsäure, Itaconsäure oder deren Säureanhydriden, Säureestern, Säureamiden oder Säureimiden erfolgen. Andere geeignete Haftvermittler sind Copolymerisate von Ethylen oder Propylen mit α,β-ungesättigten Carbonsäuren, wie Acrylsäure, Methacrylsäure, deren Salzen oder Alkylestern oder entsprechende Pfropfpolymere der genannten Monomere auf Polyolefine oder partiell verseifte Ethylen-Vinylacetat-Copolymerisate, die gegebenenfalls mit einem Monomer der obengenannten Säuren pfropfpolymerisiert sind. Handelsprodukte, die hierfür geeignet sind, sind beispielsweise Bynel® oder Surlyn® der DuPont Company, Primacor® der Dow Chemical, Admer® der Mitsubishi Petrochemical Industries, Limited oder Novatec® der Mitsubishi Kasei Corporation.

Eine zweckmäßige Ausführungsform des Erfindungsgegenstandes besteht darin, daß die dem Füllgut zugekehrte Innenschicht im wesentlichen aus wenigstens einem Styrolhomopolymer und/oder -copolymer, die darauffolgende Schicht im wesentlichen aus wenigstens einem Olefinhomopolymer und/oder -copolymer und die Außenschicht zu wenigstens 90 mol% aus wenigstens einem aliphatischen Homo- und/oder Copolyamid oder aus wenigtens einem teilaromatischen Homo- und/oder Copolyamid, gegebenenfalls im Gemisch mit einem aliphatischen Homo- und/oder Copolyamid in solcher Zusammensetzung, daß die Schicht zu wenigstens 90 mol% aus aliphatischen Einheiten aufgebaut ist, besteht.

Wenn die Schicht (c) die Außenschicht ist, die gegebenenfalls auch aus mehreren Unterschichten bestehen kann, so beträgt die Dicke dieser Außenschicht oder Gesamtheit ihrer Unterschichten vorzugsweise 20 bis 60 %, die Dicke der Schicht (a) 6 bis 60 % und die Dicke der Schicht (b) 20 bis 40 % der Gesamtdicke der Schlauchfolie. Wenn die Schicht (c) die Innenschicht ist, liegt ihre Dicke bzw. die Gesamtdicke ihrer Unterschichten zweckmäßig bei 6 bis 60 %, die Dicke der Schicht (a) bei 6 bis 60 % und die Dicke der Schicht (b) bei 20 bis 40 % der Gesamtdicke der Schlauchfolie. Zweckmäßige Schichtdicken für die Schicht (c) liegen bei 20 bis 30 µm, für die Schicht (a) bei 3 bis 10 µm und für die Schicht (b) bei 10 bis 20 µm.

Die Schlauchfolien nach der Erfindung sind zweckmäßig biaxial gereckte, schrumpfbare Verpackungshüllen aus einer mindestens dreischichtigen koextrudierten und biaxial streckorientierten sowie thermofixierten Schlauchhülle.

Die erfindungsgemäßen Schlauchfolien werden nach dem Koextrudieren zweckmäßig biaxial verstreckt, was gewöhnlich bei Temperaturen von 0 bis 550 °C erfolgt. Die Reckverhältnisse in Längs- und Querrichtung liegen gewöhnlich im Bereich von etwa 1 : 1,5 bis 1 : 4, das Flächenreckverhältnis im Bereich von 6 bis 14. Weiterhin kann eine Thermofixierung bei Temperaturen von 100 bis 250 °C durchgeführt werden, durch die ein erwünschter Schrumpf der Schlauchfolie erzielt werden kann. Dieser Schrumpf, gemessen in Wasser bei 80 °C, liegt zweckmäßig im Bereich von 0 bis 25 %, vorzugsweise im Bereich von 14 bis 19 %.

Zur Verbesserung der Haftung der Innenschicht an dem Wurstbrät oder anderem Füllgut ist es zweckmäßig, die Innenschicht mit einer Koronaentladung zu behandeln.

Die erfindungsgemäßen Schlauchfolien haben eine optimale Kombination von Eigenschaften im Sinne der Aufgabenstellung und sind problemlos herstellbar. Sie sind gut verarbeitbar und führen nach dem Füllen, Verschließen und Kochen oder Sterilisieren zu Lebensmittelprodukten, wie Würsten, die ausgezeichnete Qualität aufgrund der hervorragenden Saurerstoff- und Wasserdampfbarriere sowie ausgezeichnetes Aussehen aufgrund der optimalen Haftung am Füllgut und Schrumpfung der Folie zeigen.

Durch die folgenden Beispiele wird die Erfindung weiter erläutert:

### Beispiel 1

Eine fünfschichtige Schlauchfolie wurde durch Koextrudieren mit der nachstehend genannten Schichtenfolge mit Extrudern und einem Dünnschicht-Extrusionskopf hergestellt. Die Schichtenfolge ist so wiedergegeben, daß die erste Schicht die Außenschicht und die letzte die Innenschicht der Schlauchfolie wird:
Aliphatisches Polyamid PA 6, vermischt mit einem teilaromatischen Polyamid, das der Schicht 2 mol% Isophthalsäurereste zufügt
Aliphatisches Copolyamid PA 6/66
Aliphatisches Polyamid PA 6
Die Gesamtdicke der drei Polyamidschichten beträgt etwa 27 µm.
Mischung von Ethylen-Vinylacetat-Copolymer und Ethylen-Methacrylsäure-Copolymer (Gewichtsverhältnis 70 : 30) - Schichtdicke 15 bis 16 µm
Styrol-Butadien-Blockcopolymer (Styroflex® der BASF) - Schichtdicke 5 bis 7 µm.

Nach dem Koextrudieren und biaxialen Verstrecken bei einer Temperaturfolge von 0 bis 500 °C wurde die Innenschicht durch eine Koronaentladung behandelt und der Schlauch thermofixiert, flachgelegt und aufgewickelt. Die Gesamtdicke der Schlauchfolie betrug etwa 50 µm. Der Schrumpf betrug in Maschinenrichtung 17 % und in Querrichtung 16 %.

### Beispiel 2

Die Schlauchfolie des Beispiels 1 wurde so abgewandelt, daß die zweite und dritte Polyamidschicht ausgetauscht wurden. Im übrigen entsprachen der Aufbau und die Herstellung dem Beispiel 1.

### Beispiel 3

Entsprechend dem Beispiel 1 wurde eine fünfschichtige Schlauchfolge mit der nachstehenden Schichtenfolge hergestellt, wobei wiederum wie auch in den nächsten Beispielen die erste Schicht die Außenschicht und die letzte Schicht die Innenschicht der Schlauchfolie wird:

| | | |
|---|---|---|
| Styrol-Butadien-Blockcopolymer (Styroflex® der BASF) | Schichtdicke | 10 µm |
| | | |
| Haftvermittlerschicht (Surlyn 1857® der DuPont) | Schichtdicke | 5 µm |
| | | |
| Mischung von Ethylen-Vinylacetat-Copolymer und Ethylencopolymer (Gewichtsverhältnis 70 : 30) | Schichtdicke | 10 µm |
| | | |
| Haftvermittlerschicht (Surlyn 1857®) | Schichtdicke | 5 µm |
| | | |
| Aliphatisches Copolyamid PA 6/66 | Schicktdicke | 20 µm |

### Beispiel 4

Entsprechend dem Beispiel 1 wurde eine fünfschichtige Schlauchfolie wie folgt hergestellt:

| | | |
|---|---|---|
| Aliphatisches Polyamid PA 6 vermischt mit einem teilaromatischen Polyamid mit 2 mol% Isophthalsäureresten | Schichtdicke | 10 µm |
| | | |
| Aliphatisches Copolyamid PA 6/66 | Schichtdicke | 10 µm |
| | | |
| Styrol-Butadien-Blockcopolymer (Styroflex®) | Schichtdicke | 5 µm |
| | | |
| Mischung von Ethylen-Vinylacetat-Copolymer und Ethylen-(Meth)acrylsäure-Copolymer (Gewichtsverhältnis 70 : 30) | Schichtdicke | 15 µm |
| | | |
| Aliphatisches Polyamid PA 6 | Schichtdicke | 10 µm |

### Beispiel 5

Entsprechend dem Beispiel 1 wurde eine fünfschichtige Schlauchfolie mit folgender Schichtenfolge hergesetellt:

| | | |
|---|---|---|
| Aliphatisches Copolyamid PA 6/66 | Schichtdicke | 10 µm |
| | | |
| Mischung von Ethylen-Vinylacetat-Copolymer und Ethylen-(Meth)acrylsäure-Copolmyer (Gewichtsverhältnis (70 : 30) | Schichtdicke | 5 µm |
| | | |
| Styrol-Butadien-Blockcopolymer (Styroflex®) | Schichtdicke | 12,5 µm |
| | | |
| Mischung von Ethylen-Vinylacetat-Copolymer und Ethylen-(Meth)acrylsäure-Copolymer (Gewichtsverhältnis 70 : 30) | Schichtdicke | 5 µm |
| | | |
| Aliphatisches Polyamid PA 6 | Schichtdicke | 17,5 µm |

### Beispiel 6

Eine fünfschichtige Schlauchfolie wurde durch Koextrudieren gemäß Beispiel 1 hergestellt:

| | | |
|---|---|---|
| Aliphatisches Polyamid PA 6 | Schichtdicke | 11 µm |
| | | |
| Alphatisches Polyamid PA 6 | Schichtdicke | 10 µm |
| | | |
| Aliphatisches Copolyamid PA 6/66 | Schichtdicke | 7,5 µm |
| | | |
| Ethylen-Vinylacetat-Copolymer im Gemisch mit Ethylen-(Meth)acrylsäure-Copolmyer (Gewichtsverhältnis (70 : 30) | Schichtdicke | 18,5 |
| | | |
| Styrol-Butadien-Blockcopolymer (Styroflex®) | Schichtdicke | 3 µm |

### Beispiel 7

Eine fünfschichtige Schlauchfolie wurde nach Beispiel 1 wie folgt hergestellt:

| | | |
|---|---|---|
| Styrol-Butadien-Blockcopolymer (Styrolfex®) | Schichtdicke | 9 µm |
| | | |
| Mischung von Ethylen-Vinylacetat-Copolymer und Ethylen-(Meth)acrylsäure-Copolymer (Gewichtsverhältnis 70 : 30) | Schichtdicke | 16 µm |
| | | |
| Haftvermittlerschicht (Surlyn 1857®) | Schichtdicke | 4 µm |
| | | |
| Aliphatisches Copolyamid PA 6/66 | Schichtdicke | 10 µm |
| | | |
| Aliphatisches Polyamid PA 6 | Schichtdicke | 11 µm |

## Patentansprüche

1. Wenigstens dreischichtige Schlauchfolie zur Aufnahme oder Umhüllung von Lebensmitteln, insbesondere als Wursthülle, mit einer wenigstens überwiegend aus aliphatischem Polyamid bestehenden Schicht, **dadurch gekennzeichnet**, daß die Schlauchfolie wenigstens eine mindestens zu 40 Gew.% aus wenigstens einem Styrolhomopolymer und/oder -copolymer bestehende Schicht (a), wenigstens eine mindestens zu 75 Gew.% aus wenigstens einem Olefinhomopolymer und/oder -copolymer bestehende Schicht (b) und wenigstens eine Schicht (c) aufweist, die wenigstens ein aliphatisches und/ oder teilaromatisches Homo- und/oder Copolyamid in solcher Menge und Zusammensetzung enthält, daß die Schicht zu wenigstens 75 Gew.% aus aliphatischen Polyamid-Einheiten aufgebaut ist.

2. Schlauchfolie nach Anspruch 1, **dadurch gekennzeichnet**, daß die Schicht (a) mindestens zu 60, vorzugsweise mindestens zu 75, besonders zu etwa 100 Gew.% aus Styrolhomopolymer und/oder -copolymer besteht.

3. Schlauchfolie nach Anspruch 1 oder 2, **dadurch gekennzeichnet**, daß die Schicht (a) vorzugsweise die dem Füllgut zugekehrte Innenschicht und die Schicht (c) die Außenschicht ist.

4. Schlauchfolie nach einem der Ansprüche 1 bis 3, **dadurch gekennzeichnet**, daß das Styrolcopolymer im wesentlichen aus einem Styrol-Butadien-Copolymer besteht.

5. Schlauchfolie nach Anspruch 4, **dadurch gekennzeichnet**, daß das Styrol-Butadien-Copolymer ein Styrolbutadien-Blockcopolymer mit Polystyrol-Blöcken und Styrol-Butadien-Copolymerblöcken ist.

6. Schlauchfolie nach einem der Ansprüche 1 bis 5, **dadurch gekennzeichnet**, daß das Olefinhomopolymer aus Polyethylen und/oder Polypropylen und das Olefincopolymer aus einem Copolymeren linearer alpha-Olefine mit 2 bis 8 Kohlenstoffatomen, vorzugsweise ein Ethylen- und/oder Propylen-Copolymer ist.

7. Schlauchfolie nach Anspruch 6, **dadurch gekennzeichnet**, daß das Ethylen-Copolymer ein Ethylen-Vinylacetat-Copolymer, vorzugsweise mit 5 bis 20, besonders 8 bis 15 Gew.% Vinylacetatgruppen, ist.

8. Schlauchfolie nach Ansprch 7, **dadurch gekennzeichnet**, daß das Ethylen-Vinylacetat-Copolymer im Gemisch mit Ethylen-(Meth)acrylsäure-Copolymer oder Propylen-(Meth)acrylsäure-Copolymer, vorzugsweise mit 3 bis 20, besonders 5 bis 15 Gew.% Carboxylgruppen, vorliegt.

9. Schlauchfolie nach einem der Ansprüche 1 bis 8, **dadurch gekennzeichnet**, daß die Schicht (b) aus einem Gemisch von 40 bis 90 Gew.% Ethylen-Vinylacetat-Copolymer und 60 bis 10 Gew.% Ethylen-(Meth)acrylsäure-Copolymer und/oder Propylen-(Meth)acrylsäure-Copolymer, vorzugsweise 55 bis 75 Gew.% Ethylen-Vinylacetat-Copolymer und 45 bis 25 Gew.% Ethylen-(Meth)acrylsäure-Copolymer besteht.

10. Schlauchfolie nach einem der Ansprüche 1 bis 9, **dadurch gekennzeichnet,** daß das teilaromatische Homo- und/oder Copolyamid bis zu 10, vorzugsweise bis zu 4 mol% aromatische Einheiten, vorzugsweise Isophthalsäureeinheiten, enthält.

11. Schlauchfolie nach einem der Ansprüche 1 bis 10, **dadurch gekennzeichnet**, daß die Schicht (c) aus mehreren, vorzugsweise zwei oder drei Unterschichten besteht.

12. Schlauchfolie nach Anspruch 11, **dadurch gekennzeichnet**, daß Schicht (c) vorzugsweise die Außenschicht ist und nur die äußerste der Unterschichten dieser Außenschicht bis zu 4 Mol% aromatische Einheiten enthält, während die übrigen Unterschichten der Außenschicht im wesentlichen nur aus aliphatischem Polyamid bestehen.

13. Schlauchfolie nach einem der Ansprüche 1 bis 12, **dadurch gekennzeichnet,** daß die Innen- oder Außenschicht durch Koronaentladung behandelt wurde.

14. Schlauchfolie nach einem der Ansprüche 1 bis 13, **dadurch gekennzeichnet**, daß die Dicke der Schicht (c) als Außenschicht etwa 20 bis 60 %, die Dicke der Schicht (a) etwa 6 bis 60 % und die Dicke der Schicht (b) etwa 20 bis 40 % der Gesamtdicke der Schlauchfolie beträgt.

15. Schlauchfolie nach einem der Ansprüche 1 bis 13, **dadurch gekennzeichnet,** daß die Dicke der Schicht (c) als Innenschicht bzw. der Gesamtheit von deren Unterschichten etwa 6 bis 60 %, die Dicke der Schicht (a) etwa 6 bis 60 % und die Dicke der Schicht (b) etwa 20 bis 40 % der Gesamtdicke der Schlauchfolie beträgt.

16. Schlauchfolie nach einem der Ansprüche 1 bis 16, **dadurch gekennzeichnet**, daß die Dicke der Schicht (c) bzw. die Gesamtheit von deren Unterschichten 20 bis 30 µm, die Dicke der Schicht (a) 3 bis 10 mm und die Dicke der Schicht (b) 10 bis 20 µm betragen.

17. Schlauchfolie nach einem der Ansprüche 1 bis 16, **dadurch gekennzeichnet**, daß zwischen der Schicht (b) und wenigstens einer der ihr benachbarten Schichten eine zusätzliche Haftvermittlerschicht angeordnet ist.

18. Schlauchfolie nach Anspruch 17, **dadurch gekennzeichnet**, daß der Haftvermittler ein mit funktionellen Gruppen modifiziertes Polyolefinharz ist, wobei die funktionellen Gruppen vorzugsweise Vinylacetatgruppen, ethylenisch ungesättigte Carbonsäuregruppen, deren Salze oder Ester oder ethylenisch ungesättigte Anhydridgruppen sind.

19. Schlauchfolie nach Anspruch 17 oder 18, **dadurch gekennzeichnet,** daß die Dicke der Haftvermittlerschicht(en) 3 bis 10 m beträgt bzw. betragen.

20. Schlauchfolie nach einem der Ansprüche 1 bis 19, **dadurch gekennzeichnet,** daß das aliphatische Homo- oder Copolyamid aus Polyamid 6, Polyamid 66 und/oder Polyamid 6/66 besteht.

21. Schlauchfolie nach einem der Ansprüche 1 bis 20, **dadurch gekennzeichnet**, daß sie biaxial gereckt, thermofixiert und schrumpfbar ist.

22. Schlauchfolie nach einem der Ansprüche 1 bis 21, **dadurch gekennzeichnet,** daß wenigstens eine ihrer Schichten (c) im wesentlichen aus einem Homo- oder Copolyamid mit aliphatischen Dicarbonsäureeinheiten mit 4 bis 10 Kohlenstoffatomen, insbesondere Adipinsäureeinheiten, und aliphatischen Diamineinheiten mit 4 bis 8 Kohlenstoffatomen, insbesondere Hexamethylendiamineinheiten und/oder Einheiten von ω-Aminocarbonsäuren mit 6 bis 12 Kohlenstoffatomen oder deren Lactamen, insbesondere 11-Aminoundecansäure, ω-Laurinlactam oder Caprolactam oder Mischungen hiervon besteht.

23. Schlauchfolie nach einem der Ansprüche 1 bis 22, **dadurch gekennzeichnet**, daß mindestens eine ihrer Schichten (c) aus einem oder mehreren teilaromatischen Homo- oder Copolyamiden aus aliphatischen Diamineinheiten mit 4 bis 8 Kohlenstoffatomen, insbesondere Caprolactam und/oder Hexamethylendiamineinheiten und aromatischen Dicarbonsäureeinheiten, insbesondere Isophthalsäure- und/oder Terephthalsäureeinheiten, und/oder aus linearem aliphatischem Homo- und/oder Copolyamid besteht.

24. Schlauchfolie nach einem der Ansprüche 1 bis 22, **dadurch gekennzeichnet,** daß deren Schichten (c) aus einem oder mehreren teilaromatischen Homo- und/oder Copolyamiden aus aromatischen Diamineinheiten, insbesondere Xylylendiamineinheiten und/oder Phenylendiamineinheiten, und aliphatischen Dicarbonsäureeinheiten, vorzugsweise mit 4 bis 10 Kohlenstoffatomen, insbesondere Adipinsäureeinheiten, und/oder aliphatischem Homo- und/oder Copolyamid besteht.

25. Schlauchfolie nach einem der Ansprüche 1 bis 24, **dadurch gekennzeichnet**, daß die Schicht (c) zusätzlich zu Homo- und/oder Copolyamid bis zu 25 Gew.% Polyolefin, insbesondere Polyethylen, lonomeres, Styrolhomo- und/oder -copolymer und/oder Polyester enthält.
